# FASCICULE DE BREVET EUROPEEN

(11) **EP 2 362 103 B1**
(45) Date de publication et mention de la délivrance du brevet: **08.01.2014**
(21) Numéro de dépôt: 11153556.3
(22) Date de dépôt: 07.02.2011
(51) Int. Cl.: A01K 97/22

(54) **Etrier de positionnement et de blocage de pieds d'appui sur le châssis d'un panier siège de pêcheur**
Positionier- und Blockierbügel der Stützbeine am Gestell eines Anglersitzes mit Korb
Clamp for positioning and locking supporting feet on the frame of a fishing seat-box

(30) Priorité: 18.02.2010 FR 1051158
(43) Date de publication de la demande: 31.08.2011
(73) Titulaire: Mossalgue, 77170 Brie Comte Robert (FR)
(72) Inventeur: Mossalgue, François, 94120, Fontenay sous Bois (FR)
(74) Mandataire: Livet, Marie-José

(56) Documents cités:
- EP-A2- 1 184 578
- EP-A2- 2 095 709
- GB-A- 2 216 497
- GB-A- 2 415 896

## Description

La présente invention concerne un panier siège de pêcheur.

Un tel panier-siège comporte d'une part un châssis constitué par un caisson portant le panier siège et le cas échéant par un cadre rigide faisant office de repose-pieds et d'autre part au moins quatre pieds d'appui.

Depuis plusieurs décennies, les pécheurs utilisent pour pratiquer leur sport favori des paniers sièges qui étaient à l'origine simplement constitués par un caisson trapézoïdal fermé par un couvercle et sur lequel le pêcheur pouvait s'asseoir.

Il a ultérieurement été proposé d'insérer sur ces caissons des casiers permettant aux pêcheurs de ranger leur petit matériel.

De tels paniers sièges étaient toutefois peu pratiques et en outre peu confortables du fait du caractère souvent accidenté des berges, ce d'autant plus que pendant les concours le pêcheur doit rester assis plusieurs heures sur un panier siège.

Pour remédier à cet inconvénient il a été proposé d'équiper le caisson portant le panier siège de quatre pieds d'appui réglables.

Pour améliorer encore le confort des pêcheurs on a ultérieurement équipé les paniers sièges de repose-pieds montés coulissants ou articulés sur le caisson au moyen d'un système de glissières latérales et munis de deux pieds d'appui à leur partie avant.

Les paniers sièges classiques sont actuellement en règle générale équipés d'un châssis constitué d'une part d'un caisson reposant sur quatre pieds d'appui et portant le panier siège et d'autre part d'un cadre rigide monté coulissant, muni de deux pieds d'appui à sa partie avant et faisant office de repose-pieds.

Il s'est toutefois avéré que le châssis de tels paniers sièges classiques présentait une rigidité insuffisante lorsque le pêcheur devait se lever sur le repose-pieds, par exemple en présence d'une « prise » ou pour jeter des amorces dans l'eau.

Pour augmenter cette rigidité, il a été proposé d'inverser la structure des paniers sièges classiques en les équipant d'un châssis particulier constitué d'une part par un cadre rigide faisant office de repose-pieds reposant sur quatre pieds d'appui et d'autre part d'un caisson monté coulissant portant le panier siège et muni de deux pieds d'appui à sa partie arrière mais dépourvu de pieds d'appui à sa partie avant.

Quelle que soit leur structure, ces paniers sièges qui sont montés sur six pieds d'appui sont de plus en plus sophistiqués dans la mesure où ils sont en outre équipés de toute une série d'accessoires de pêche (supports de bourriche, supports de cannes, plateformes, tablettes...) qui permettent aux pêcheurs de disposer ainsi d'une véritable « station » de pêche.

Une telle « station » de pêche constitue un ensemble très volumineux qui doit souvent être autant que possible démonté pour permettre son transport, ce qui correspond à une opération particulièrement longue et incommode.

En particulier pour monter ou démonter les pieds d'appui d'un panier siège, qui sont équipés d'une embase à leur extrémité inférieure, il est nécessaire de les introduire dans des anneaux de positionnement et de blocage équipant le châssis de ce panier siège ainsi que le cadre rigide faisant office de repose-pieds puis de les régler indépendamment.

Pour pouvoir effectuer cette opération, les pieds d'appui du panier siège doivent être parfaitement lisses et ne pas comporter d'éléments en saillie tels qu'à titre d'exemple des vis de réglage de pieds d'appui télescopiques.

Les accessoires de pêche doivent ensuite être successivement mis en place et bloqués le long des pieds d'appui, au moyen d'éléments en particulier de bagues de montage spécifiques, ce qui correspond là encore à une opération particulièrement longue et incommode, ce d'autant plus qu'un pied d'appui peut porter une série d'accessoires de pêche superposés sur sa longueur. Voir par exemple les documents GB 2415896 et GB 2216497.

Il est en effet actuellement impossible de pouvoir disposer de paniers sièges dont les pieds d'appui ont un haut fonctionnel.

La présente invention a pour objet de remédier à ces inconvénients en proposant un panier siège de pêcheur du type susmentionné ayant une structure de nature à faciliter dans une large mesure le montage des pieds d'appui sur le châssis et de surcroît à permettre le montage des pieds d'appui quelconques non lisses de façon à rendre utile la partie supérieure d'un pied d'appui et à épargner la mise en place ultérieure d'une série d'accessoires de pêche sur celui ci.

Selon l'invention, les pieds d'appui sont respectivement montés sur le châssis du panier siège au moyen d'un étrier de positionnement et de blocage conçu de manière à permettre d'exclure tout risque de glissement, le long de ces pieds d'appui, du caisson portant le panier siège qui doit supporter le poids du pécheur dont il est essentiel de garantir la sécurité.

Selon l'invention un tel étrier de positionnement et de blocage comporte, suivant la revendication 1, une partie fixe solidaire du châssis constituée par un évidement de réception d'un pied d'appui, ayant une géométrie adaptée à la section de ce pied ainsi qu'une partie mobile en rotation coopérant avec cette partie fixe et constituée par un tampon d'obturation.

L'évidement de réception du pied d'appui définit une première demi-mâchoire de serrage.

Le tampon d'obturation définit une seconde demi-mâchoire de serrage associée à la première demi-mâchoire de serrage et ayant elle aussi une géométrie adaptée à la section du pied d'appui.

Ce tampon est articulé sur le châssis du panier siège autour d'un axe formant charnière essentiellement parallèle au pied d'appui de façon à pouvoir être déplacé entre d'une part une position d'ouverture dans laquelle ce pied peut être introduit latéralement dans l'évidement de réception ou extrait latéralement de celui-ci et d'autre part une position de fermeture dans laquelle les deux demi-mâchoires associées sont rabattues l'une contre l'autre de manière à encercler une cavité ayant une géométrie correspondant à la section du pied d'appui.

Selon l'invention, l'étrier de positionnement et de blocage renferme également des organes de verrouillage du tampon d'obturation en position de fermeture ainsi que des organes de blocage à serrage réglable du pied d'appui entre les deux mâchoires de serrage associées lorsque le tampon d'obturation est en position de fermeture.

Selon une autre caractéristique de l'invention, les organes de blocage du pied d'appui peuvent avantageusement être constitués par un bouton de blocage monté à l'extérieur du tampon d'obturation et se prolongeant à la partie interne de ce tampon par une broche filetée mobile dans un taraudage correspondant et susceptible de faire saillie dans la cavité de réception du pied d'appui par son extrémité libre pour venir s'appliquer contre le pied d'appui.

L'actionnement du bouton de blocage par le pêcheur permet ainsi de bloquer le pied d'appui dans la cavité définie entre les deux demi-mâchoires de serrage associées de façon à exclure tout glissement du caisson portant le panier siège le long de ce pied d'appui.

Selon une caractéristique particulièrement avantageuse de l'invention, les organes de verrouillage du tampon d'obturation en position de fermeture sont constitués par une patte de verrouillage montée élastiquement sur le châssis du panier siège ou sur le tampon d'obturation et venant automatiquement s'encliqueter à force sur le tampon d'obturation ou le châssis du panier siège en position de fermeture.

Selon une première variante de l'invention, la patte de verrouillage peut être montée sur un ressort fixé au châssis du panier siège et être équipée à son extrémité libre d'un orifice de verrouillage dans lequel est introduit un ergot associé solidaire du tampon d'obturation, en position de fermeture.

Selon une seconde variante de l'invention, la patte de verrouillage peut être montée sur ressort, sur le tampon d'obturation et constituer un pêne susceptible de venir en prise dans un orifice de verrouillage associé du châssis du panier siège, en position de fermeture.

Il est également envisageable de monter élastiquement la patte de verrouillage sur le tampon d'obturation et de l'équiper à son extrémité libre d'un crochet venant en prise dans un orifice de verrouillage associé du châssis du panier siège en position de fermeture.

Dans tous les cas, le montage et le démontage des pieds d'appui du panier siège est particulièrement simple et rapide tout en garantissant la sécurité du pêcheur.

Selon une autre caractéristique de l'invention, le panier siège est équipé de pieds d'appui ayant un haut fonctionnel.

On peut ainsi créer une nouvelle « génération » d'accessoires spécifiques pour paniers sièges intégrés à la partie haute fonctionnelle de pieds d'appui et développer ainsi des paniers sièges également équipés de châssis et de repose-pieds de plus grande dimension.

Les caractéristiques du panier siège qui fait l'objet de l'invention seront décrites plus en détails en se référant aux dessins non limitatifs annexés dans lesquels :
- La figure 1 est une vue en perspective schématique d'un étrier de positionnement et de blocage conforme à la première variante de l'invention en position d'ouverture.
- La figure 2 est une vue en perspective schématique de l'étrier de positionnement et de blocage représenté sur la figure 1 en position de fermeture.
- La figure 3 est une vue en perspective schématique d'un étrier de positionnement et de blocage conforme à la seconde variante de l'invention en position d'ouverture.
- La figure 4 est une vue en perspective schématique de l'étrier de positionnement et de blocage représenté sur la figure 3 en position de fermeture.
- La figure 5 représente un panier siège de pêcheur équipé d'un pied d'appui ayant un haut fonctionnel monté au moyen d'un étrier de positionnement et de blocage tel que représenté sur les figures 1 à 4.

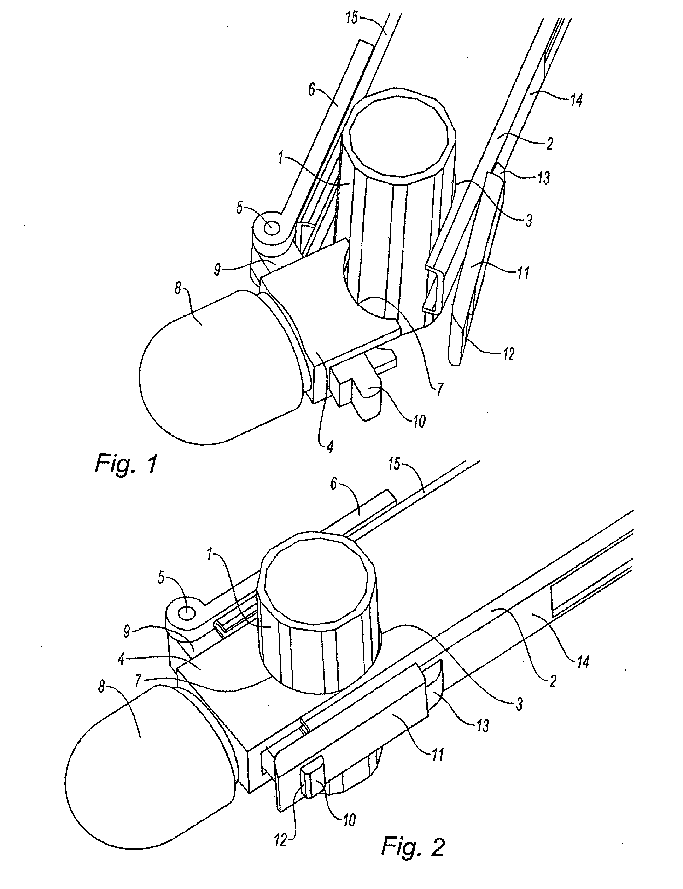

Les figures 1 et 2 représentent une première variante de réalisation d'un étrier de positionnement et de blocage d'un pied d'appui tubulaire 1, dont seul un tronçon a été représenté, sur le châssis d'un panier siège de pêcheur constitué par l'assemblage de tubes 2 ayant une section rectangulaire dont un seul a été représenté.

Selon les figures et 2, le tube 2 est équipé à son extrémité d'un évidement de réception 3 du pied d'appui 1 ayant une géométrie adaptée à la section de ce pied 1.

Cet évidement de réception 3 définit une première demi-mâchoire de serrage de l'étrier de positionnement et de blocage.

Le tube 2 est également équipé sur l'une de ses faces latérales ou première face latérale 14 d'une patte de verrouillage 11 montée sur ce tube 2 par l'intermédiaire d'un ressort 13 et équipée à son extrémité libre d'un orifice de verrouillage 12.

La fonction de cette patte de verrouillage 11 sera précisée dans la suite de cet exposé.

Selon les figures 1 et 2, l'étrier de positionnement et de blocage comporte également un tampon d'obturation 4 monté pivotant autour d'un axe d'articulation 5 parallèle au pied d'appui 1 et solidaire du châssis du panier siège.

L'axe d'articulation 5 est plus précisément monté à l'extrémité d'un embout de fixation 6 fixé sur la seconde face latérale 15 du tube 2.

Le tampon d'obturation 4 délimite une seconde demi-mâchoire de serrage 7 associée à la première demi-mâchoire de serrage 3 située sur le tube 2 et ayant elle aussi une géométrie adaptée à la section du pied d'appui 1.

Selon les figures 1 et 2, le tampon d'obturation 4 est équipé sur sa face opposée à la seconde demi-mâchoire de serrage 7 d'un bouton de blocage 8 qui se prolonge à la partie interne de ce tampon, ce d'une manière non représentée, par une broche filetée mobile dans un taraudage correspondant.

Suite à l'actionnement du bouton de blocage 8 cette broche peut faire saillie à l'extérieur du tampon d'obturation 4 au niveau de la demi-mâchoire de serrage 7.

Le tampon d'obturation 4 est par ailleurs équipé d'une barrette transversale traversante 9 dont une première extrémité est articulée autour de l'axe d'articulation 5 tandis que sa seconde extrémité se prolonge par un ergot 10 dont la fonction sera elle aussi décrite plus en détails dans la suite de cet exposé.

L'étrier de positionnement et de blocage est mobile entre une position d'ouverture représentée sur la figure 1 et une position de fermeture représentée sur la figure 2.

Selon la figure 1, en position d'ouverture le tampon d'obturation 4 est dégagé du tube 2 par rotation autour de l'axe d'articulation 5 qui fait alors office de charnière de façon à libérer entre les deux demi-mâchoires 3, 7 un espace suffisant pour permettre de positionner le pied d'appui 1 ou de l'extraire.

A partir de la position d'ouverture le pêcheur peut déplacer l'étrier de positionnement et de blocage vers la position de fermeture représentée sur la figure 2 en faisant tourner le tampon d'obturation 4 autour de l'axe d'articulation 5.

Au cours de ce déplacement le pêcheur peut dégager la patte de verrouillage 11 de la première face latérale 14 du tube 2 contre la force de rappel exercée par le ressort 13 pour l'amener dans la position représentée sur la figure 1, puis la libérer à nouveau en fin de déplacement de sorte que l'orifice de verrouillage 12 vienne s'encliqueter autour de l'ergot 10 en empêchant ainsi tout déplacement ultérieur du tampon d'obturation 4 vers la position d'ouverture.

Selon la figure 2, en position de fermeture, le pied d'appui 1 est emprisonné dans la cavité située entre les deux demi-mâchoires 3, 7 et peut être bloqué par le pêcheur suite à l'actionnement du bouton de blocage 8 et à l'application de l'extrémité de la broche filetée contre sa périphérie externe.

A partir de la position de fermeture représentée sur la figure 2, le pêcheur peut déplacer l'étrier de positionnement et de blocage dans la position d'ouverture représentée sur la figure 1 pour enlever le pied d'appui 1 en dégageant la patte de verrouillage 11 de la première face latérale 14 du tube 2 de façon à libérer l'ergot 10 puis en faisant tourner le tampon d'obturation 4 autour de l'axe d'articulation 5.

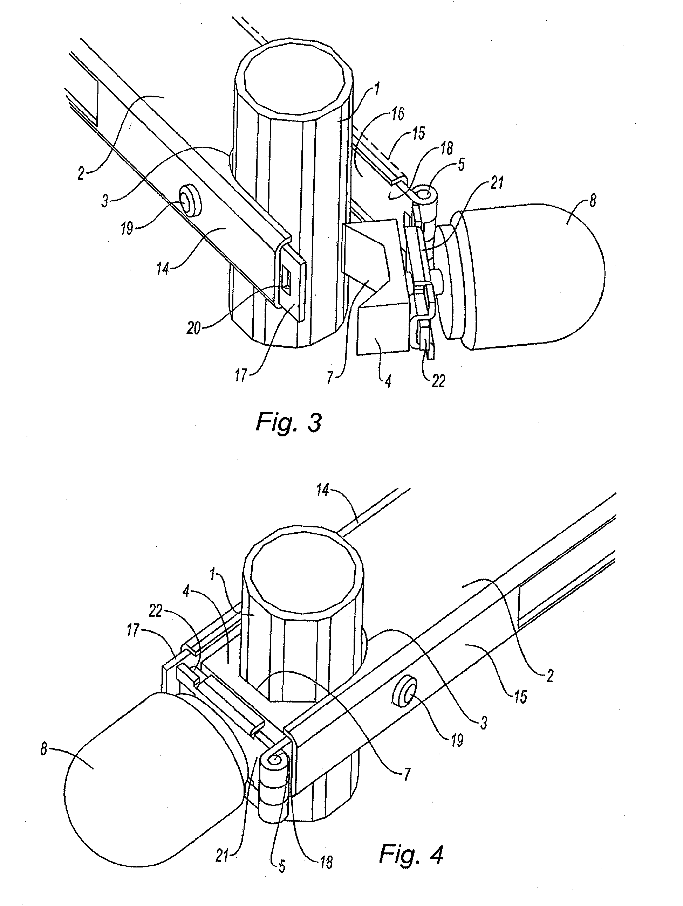

Les figures 3 et 4 représentent une seconde variante de réalisation d'un étrier de positionnement et de blocage d'un pied d'appui tubulaire 1 sur le châssis d'un panier siège de pêcheur constitué par l'assemblage de tubes 2 ayant une section rectangulaire.

Sur ces figures, les éléments similaires à ceux de l'étrier de positionnement et de blocage représenté sur les figures 1 et 2 sont désignés par les mêmes références.

Cette seconde variante de réalisation se distingue de la première en ce que le tube 2 est équipé à sa partie interne d'un arceau en forme de U 16 fixé au moyen de vis 19 et dont les branches latérales 17, 18 s'appliquent respectivement contre les faces latérales 14, 15 du tube 2.

Les branches latérales 17, 18 de l'arceau 16 font saillie à l'extérieur de ce tube 2 par leurs extrémités libres.

La première branche latérale 17 de l'arceau 16 est équipée à ce niveau d'un orifice de verrouillage 20.

L'axe d'articulation 5 est quant à lui monté à l'extrémité de la seconde branche latérale 18 de l'arceau 16.

Selon les figures 3 et 4, le tampon d'obturation 4 est équipé, sur sa face opposée à la demi-mâchoire de serrage 7 d'une barrette transversale 21 dont une première extrémité est articulée autour de l'axe d'articulation 5.

Une patte de verrouillage formant pêne 22 montée sur un ressort non représenté sur les figures peut glisser le long de la barrette transversale 21.

Cette patte de verrouillage 22 est rappelée dans une position dans laquelle elle fait saillie à l'extérieur de la barrette transversale 21 en l'absence de toute contrainte extérieure s'exerçant sur elle.

Selon la figure 3 en position d'ouverture le tampon d'obturation 4 est dégagé du tube 2 par rotation autour de l'axe d'articulation 5 qui fait alors office de charnière de façon à libérer entre les deux demi-mâchoires 3, 7 un espace suffisant pour permettre de positionner le pied d'appui 1 ou de l'extraire.

A partir de cette position d'ouverture le pêcheur peut déplacer l'étrier de positionnement et de blocage vers la position de fermeture représentée sur la figure 4 en faisant tourner le tampon d'obturation 4 autour de l'axe d'articulation 5.

A la fin de ce déplacement la patte de verrouillage formant pêne 22 vient automatiquement s'encliqueter dans l'orifice 20 sous l'action de la force de rappel exercée par le ressort non représenté en empêchant ainsi tout déplacement ultérieur du tampon d'obturation 4 vers la position d'ouverture.

Selon la figure 4, en position de fermeture, le pied d'appui 1 est ainsi automatiquement emprisonné dans la cavité située entre les deux demi-mâchoires 3, 7 et peut être bloqué par le pêcheur suite à l'actionnement du bouton de blocage 8 et à l'application de l'extrémité de la broche filetée contre sa périphérie externe.

A partir de la position de fermeture représentée sur la figure 4, le pêcheur peut déplacer l'étrier de positionnement et de blocage dans la position d'ouverture représentée sur la figure 3, pour enlever le pied d'appui, en dégageant la patte de verrouillage formant pêne 22 de l'orifice de verrouillage 20 contre la force de rappel exercée par le ressort puis en faisant tourner le tampon d'obturation 4 autour de l'axe d'articulation 5.

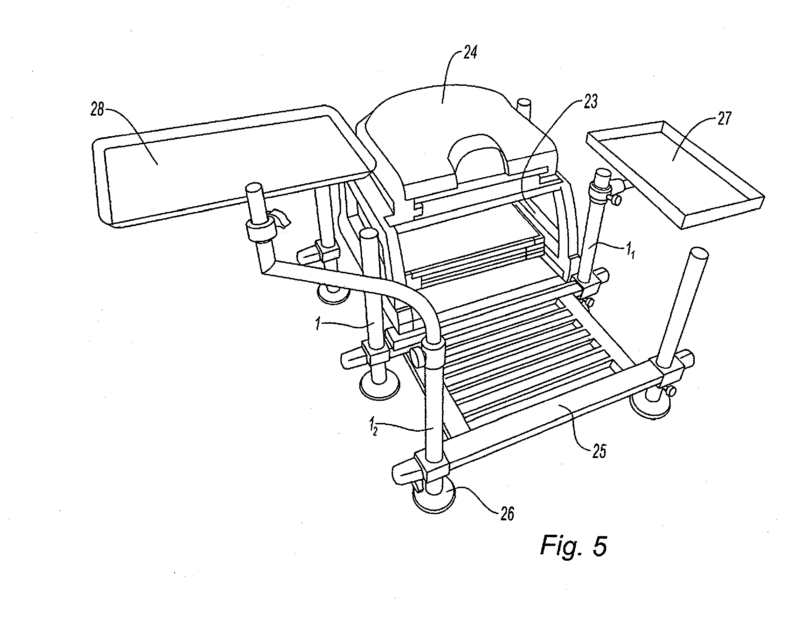

Selon la figure 5 le panier siège est équipé d'un châssis constitué d'une part par un caisson 23 reposant sur deux pieds d'appui 1 et portant le panier siège proprement dit 24, et d'autre part d'un cadre rigide 25 monté coulissant muni de quatre pieds d'appui 1 à sa partie avant et faisant office de repose-pieds.

Les six pieds d'appui 1 de ce panier siège qui sont tous équipés d'une embase 26 sont montés sur le châssis 23, 25 à l'aide d'étriers de positionnement et de blocage tels que définis ci-dessus en référence aux figures 1 à 4.

L'un des pieds d'appui 1₁ est équipé d'une tablette 27 fixée à celui-ci de façon traditionnelle, alors qu'un second pied d'appui 1₂ situé à l'avant du cadre rigide 25 faisant office de repose-pieds est un pied d'appui télescopique à haut fonctionnel portant un plateau 28.

### NOMENCLATURE

- 1, 1₁, 1₂: Pied d'appui
- 2: Tube, châssis
- 3: Evidement de réception
- 4: Tampon d'obturation
- 5: Axe d'articulation
- 6: Embout de fixation
- 7: Seconde demi-mâchoire de serrage
- 8: Bouton de blocage
- 9: Barrette transversale
- 10: Ergot
- 11: Patte de verrouillage
- 12: Orifice de verrouillage
- 13: Ressort
- 14: Première face latérale
- 15: Seconde face latérale
- 16: Arceau en forme de U
- 17: Première branche latérale
- 18: Seconde branche latérale
- 19: Vis
- 20: Orifice de verrouillage
- 21: Barrette transversale
- 22: Patte de verrouillage formant pêne
- 23: Caisson
- 24: Panier siège
- 25: Cadre rigide
- 26: Embrase
- 27: Tablette
- 28: Plateau

## Revendications

1. Panier siège de pêcheur comportant d'une part, un châssis (2) constitué par un caisson (23) portant le panier siège et le cas échéant par un cadre rigide (25) faisant office de repose pieds et d'autre part, au moins quatre pieds d'appui (1),
**caractérisé en ce que**
les pieds d'appui (1) sont respectivement montés sur le châssis (2) au moyen d'un étrier de positionnement et de blocage comportant :
- une partie fixe solidaire du châssis (2) constituée par un évidement de réception (3) du pied d'appui (1) définissant une première demi-mâchoire de serrage, et
- une partie mobile en rotation coopérant avec la partie fixe et constituée par un tampon d'obturation (4) délimitant une seconde demi-mâchoire de serrage (7) du pied d'appui (1), ce tampon d'obturation (4) étant articulé sur le châssis (2) autour d'un axe d'articulation (5) formant charnière essentiellement parallèle au pied d'appui (1) de façon, à pouvoir être déplacé entre d'une part une position d'ouverture dans laquelle ce pied d'appui (1) peut être introduit latéralement dans l'évidement de réception (3) ou extrait latéralement de celui-ci, et d'autre part une position de fermeture dans laquelle les deux demi-mâchoires (3, 7) sont rabattues l'une contre l'autre de manière à encercler une cavité ayant une géométrie correspondant à la section du pied d'appui (1),
- des organes de verrouillage (10, 12; 20, 22) du tampon d'obturation (4) en position de fermeture, et
- des organes de blocage (8) à serrage réglable du pied d'appui (1) entre les deux mâchoires de serrage (3, 7) lorsque le tampon d'obturation (4) est en position de fermeture.

2. Panier siège de pêcheur selon la revendication 1,
**caractérisé en ce que**
les organes de blocage du pied d'appui (1) sont constitués par un bouton de blocage (8) monté à l'extérieur du tampon d'obturation (4) et se prolongeant à la partie interne de ce tampon par une broche filetée mobile dans un taraudage correspondant et susceptible de faire saillie dans la cavité de réception du pied d'appui (1) par son extrémité libre pour venir s'appliquer contre ce pied d'appui.

3. Panier siège de pêcheur selon l'une quelconque des revendications 1 et 2,
**caractérisé en ce que**
les organes de verrouillage du tampon d'obturation (4) en position de fermeture sont constitués par une patte de verrouillage (11, 22) montée élastiquement sur le châssis (2) du panier siège ou sur le tampon d'obturation (4) et venant s'encliqueter à force sur le tampon d'obturation (4) ou sur le châssis (2) du panier siège.

4. Panier siège de pêcheur selon la revendication 3,
**caractérisé en ce que**
la patte de verrouillage (11) est montée sur un ressort (13) fixé au châssis (2) du panier siège et est équipée, à son extrémité libre, d'un orifice de verrouillage (12) dans lequel est introduit un ergot associé (10) solidaire du tampon d'obturation (4) en position de fermeture.

5. Panier siège de pêcheur selon la revendication 3,
**caractérisé en ce que**
la patte de verrouillage (22) est montée sur ressort sur le tampon d'obturation (4) et constitue un pêne venant en prise dans un orifice de verrouillage (20) associé du châssis (2) du panier siège en position de fermeture.

6. Panier siège de pêcheur selon l'une quelconque des revendications 1 à 5,
**caractérisé en ce que**
son châssis est constitué par l'assemblage de tubes (2) ayant une section rectangulaire.

7. Panier siège de pêcheur selon les revendications 5 et 6,
**caractérisé en ce que**
les tubes (2) sont respectivement équipés, à leur partie interne, au niveau des évidements de réception (3) des pieds d'appui (1), d'un arceau en forme de U (16) notamment fixé au moyen de vis (19) et dont les branches latérales (17, 18) s'appliquent respectivement contre les faces latérales (14, 15) du tube (2) et font saillie à l'extérieur de ce tube par leurs extrémités libres, une première branche latérale (17) étant équipée à ce niveau de l'orifice de verrouillage (20) tandis que l'axe d'articulation (5) est monté à l'extrémité de la seconde branche latérale (18).

8. Panier siège de pêcheur selon l'une quelconque des revendications 5 et 7,
**caractérisé en ce que**
le tampon d'obturation (4) est équipé, sur sa face opposée à la demi mâchoire de serrage (7), d'une barrette transversale (21) dont une première extrémité est articulée autour de l'axe d'articulation (5) et le long de laquelle peut glisser la patte de verrouillage formant pêne (22).

9. Panier siège de pêcheur selon l'une quelconque des revendications 1 à 8,
**caractérisé en ce que**
les pieds d'appui (1) ont un haut fonctionnel.

## Patentansprüche

1. Anglersitz mit Korb, einerseits mit einem aus einem Kasten (23) bestehenden Gestell (2), das den Anglersitz mit Korb trägt, und gegebenenfalls aus einem starren als Fußstütze dienenden Rahmen (25), und andererseits mit mindestens vier Stützbeinen (1),
**dadurch gekennzeichnet, dass**
die Stützbeine (1) jeweils an das Gestell (2) mittels eines Positionierungs- und Blockierungsbügels montiert sind, welcher aufweist:
- einen festen mit dem Gestell (2) verbundenen, aus einer Aufnahmeausnehmung (3) für das Stützbein (1) bestehenden Teil, der eine erste halbe Klemmbacke definiert, und
- einen drehbaren mit dem festen Teil zusammenwirkenden Teil, der aus einem eine zweite halbe Klemmbacke (7) für das Stützbein (1) begrenzenden Verschlusspuffer (4) besteht, wobei dieser Verschlusspuffer (4) um eine ein Scharnier bildende im wesentlichen zu dem Stützbein (1) parallele Anlenkachse (5) an das Gestell (2) angelenkt ist, so dass er zwischen einer Offenstellung einerseits, in der dieses Stützbein (1) seitlich in die Aufnahmeausnehmung (3) eingeführt oder seitlich aus der selben herausgenommen werden kann, und einer Schließstellung andererseits, in der die beiden halben Klemmbacken (3, 7) gegen einander geklappt sind, so dass sie einen Hohlraum einkreisen, der eine dem Querschnitt des Stützbeines (1) entsprechende Geometrie aufweist, bewegt werden kann,
- Verriegelungselemente (10, 12; 20, 22) zum Verriegeln des Verschlusspuffers (4) in Schließstellung, und
- Klemmelemente (8) zum einstellbaren Spannen des Stützbeines (1) zwischen den Klemmbacken (3, 7), wenn sich der Verschlusspuffer (4) in Schließstellung befindet.

2. Anglersitz mit Korb nach Anspruch 1,
**dadurch gekennzeichnet, dass**
die Klemmelemente für das Stützbeines (1) aus einem außen am Verschlusspuffer (4) montierten Klemmknopf (8) bestehen und an dem Innenteil dieses Puffers in eine in einer entsprechenden Gewindebohrung bewegliche Gewindespindel übergehen, die mit ihrem freien Ende in die Aufnahmeausnehmung für das Stützbein (1) hineinragen kann, um gegen dieses Stützbein zu drücken.

3. Anglersitz mit Korb nach einem der Ansprüche 1 und 2,
**dadurch gekennzeichnet, dass**
in Schließstellung die Verriegelungselemente des Verschlusspuffers (4) aus einer elastisch auf dem Gestell (2) des Sitzes mit Korb oder auf dem Verschlusspuffer (4) montierten Verriegelungslasche (11, 22) bestehen, die unter Kraftanwendung auf dem Verschlusspuffer (4) oder auf dem Gestell (2) des Sitzes mit Korb einrastet.

4. Anglersitz mit Korb nach Anspruch 3,
**dadurch gekennzeichnet, dass**
die Verriegelungslasche (11) an einer am Gestell (2) des Sitzes mit Korb befestigten Feder (13) montiert ist, und an ihrem freien Ende mit einer Verriegelungsöffnung (12) versehen ist, in die eine entsprechende in Schließposition fest mit dem Verschlusspuffer (4) verbundene Nase (10) eingeführt ist.

5. Anglersitz mit Korb nach Anspruch 3,
**dadurch gekennzeichnet, dass**
die Verriegelungslasche (22) an einer Feder am Verschlusspuffer (4) montiert ist und einen Riegel bildet, der in Schließstellung in eine entsprechende Verriegelungsöffnung (20) des Rahmens (2) des Sitzes mit Korb eingreift.

6. Anglersitz mit Korb nach einem der Ansprüche 1 bis 5,
**dadurch gekennzeichnet, dass**
sein Gestell aus dem Rohrverband (2) mit Rechteckquerschnitt besteht.

7. Anglersitz mit Korb nach den Ansprüchen 5 und 6,
**dadurch gekennzeichnet, dass**
die Rohre (2) an ihrem Inneren bei den Aufnahmeausnehmungen (3) für die Stützbeine (1) jeweils mit einem U-förmigen Bügel (16) versehen sind, der insbesondere mittels Schrauben (19) befestigt ist, und dessen seitlichen Schenkel (17, 18) sich jeweils gegen die Seitenflächen (14, 15) des Rohres (2) stützen, und mit ihren freien Enden aus diesem Rohr hinaus ragen, wobei dort ein erster seitlicher Schenkel (17) mit der Verriegelungsöffnung (20) versehen ist, während die Anlenkachse (5) am Ende des zweiten seitlichen Schenkels (18) montiert ist.

8. Anglersitz mit Korb nach einem der Ansprüche 5 und 7,
**dadurch gekennzeichnet, dass**
der Verschlusspuffer (4) an seiner der halben Klemmbacke (7) entgegen gesetzten Seite mit einem Quersteg (21) versehen ist, von dem ein erstes Ende um die Anlenkachse (5) angelenkt ist, und an dem die einen Riegel bildende Verriegelungslasche (22) entlang gleiten kann.

9. Anglersitz mit Korb nach einem der Ansprüche 1 bis 8,
**dadurch gekennzeichnet, dass**
die Stützbeine (1) ein funktionelles oberes Ende haben.

## Claims

1. A fishing seat-box comprising, on one hand, a frame (2) formed by a case (23) bearing the seat-box and, where necessary, a rigid framework (25) acting as a footrest and, on the other hand, at least four supporting feet (1), **characterized in that** the supporting feet (1) are respectively mounted on the frame (2) by means of positioning and locking clamps comprising:
- a fixed portion rigid with the frame (2) formed by a reception opening (3) for the supporting foot (1) defining a first half-jaw of the clamp;
- a portion moving in rotation cooperating with the fixed portion and formed by a closing block (4) bounding a second half-jaw (7) of the clamp for the supporting foot (1), said closing block (4) being articulated on the frame (2) about an axis of articulation (5) forming a hinge substantially parallel to the supporting foot (1) so that it may be moved between an open position in which the supporting foot (1) may be inserted laterally into the reception opening (3) or removed laterally therefrom, and a closed position in which the two half-jaws (3, 7) are brought against one another in order to encompass a cavity having a geometry corresponding to the section of the supporting foot (1);
- members (10, 12; 20, 22) for locking the closing block (4) in the closed position;
- members (8) for adjustably clamp-locking the supporting foot (1) between the two clamping jaws (3, 7) when the closing block (4) is in the closed position.

2. A fishing seat-box according to claim 1, **characterized in that** the locking members for the supporting foot (1) are formed by a locking button (8) disposed externally to the closing block (4) and being prolonged within this block by a threaded spindle moving in a corresponding thread, whose free end may project into the reception opening for the supporting foot (1) in order to be applied against this supporting foot.

3. A fishing seat-box according to any one of claims 1 and 2, **characterized in that** the members for locking the closing block (4) in the closed position are formed by a locking lug (11, 22) mounted resiliently on the frame (2) of the seat-box or on the closing block (4) and may be snap-locked on the closing block (4) or on the frame (2) of the seat-box.

4. A fishing seat-box according to claim 3, **characterized in that** the locking lug (11) is mounted on a spring (13) fixed to the frame (2) of the seat-box and is provided, at its free end, with a locking orifice (12) into which an associated pin (10), rigid with the closing block (4), is inserted in the closed position.

5. A fishing seat-box according to claim 3, **characterized in that** the locking lug (22) is spring-mounted on the closing block (4) and forms a bolt which may be captured in a locking orifice (20) associated with the frame (2) of the seat-box in the closed position.

6. A fishing seat-box according to any one of claims 1 to 5, **characterized in that** its frame is formed by the assembly of tubes (2) having a rectangular section.

7. A fishing seat-box according to claims 5 and 6, **characterized in that** the tubes (2) are respectively provided internally, at the location of the reception openings (3) for the supporting feet (1), with a U-shaped hoop (16) secured in particular by means of screws (19) and whose lateral arms (17, 18) abut respectively against the lateral surfaces (14, 15) of the tube (2) and project externally to this tube by means of their free ends, a first lateral arm (17) being provided at this location with the locking orifice (20), while the axis of articulation (5) is mounted at the end of the second lateral arm (18).

8. A fishing seat-box according to any one of claims 5 and 7, **characterized in that** the closing block (4) is provided, on its surface opposite the clamp half-jaw (7), with a transverse bar (21), a first end of which is articulated about the axis of articulation (5) and along which the locking lug forming a bolt (22) may slide.

9. A fishing seat-box according to any one of claims 1 to 8, **characterized in that** the supporting feet (1) have a functional height.
